# EUROPEAN PATENT APPLICATION

(11) **EP 4 465 267 A1**
(43) Date of publication of application: **20.11.2024**
(21) Application number: 22920493.8
(22) Date of filing: 05.12.2022
(51) Int. Cl.: G07F 7/04, G07D 7/00, G07D 11/14, G06V 10/12

(54) **BEZEL**

(30) Priority: 14.01.2022 JP 2022004065
(71) Applicant: Japan Cash Machine Co., Ltd., Osaka-shi, Osaka 556-0011 (JP)
(72) Inventor: OKAWA Katsutoshi, Osaka-shi, Osaka 547-0035 (JP); SEKI Toru, Osaka-shi, Osaka 547-0035 (JP)
(74) Representative: Flach Bauer & Partner Patentanwälte mbB
(86) International application number: PCT/JP2022/044737
(87) International publication number: WO 2023/135973

(57) **Abstract**

[Problem]

A camera device is mounted in a bezel attached to a bill validator to take user's clear face image.

[Solution to Problem]

A bezel (8) comprises a frame (4a) secured to a housing (1a) of a bill validator (1), a camera device (4) attached to the frame (4a) for taking images of user's face and a cover (4c) attached to the frame (4a) for covering the camera device (4), the cover (4c) being made of translucent and optically reflective materials.

## Description

### Technical Field

This invention relates to a bezel, in particular of the kind mounted in bill validators to contain a camera device in the bezel for taking face pictures of users who intend to utilize the bill validators.

### Background Art

Up till now, there have been developed various kinds of bezels attached to bill validators. For example, Patent Document 1 below demonstrates a bezel that comprises a verification device for detecting human biological information such as fingerprints, retinas, faces or sonagrams for example to certificate fingerprints of company employees who buy foods in company's venders. The verification device of this kind may comprise a camera device mounted on the bezel that can record two kinds of images, one being surface images of bills inserted into a bill validator and the other being face images of users to improve security against unauthorized use of the bill validator by users. To this end, the camera device in the bezel has a photoflash lump that can emit instantaneous flash lights toward a user face to take accurate face images of users to utilize them for personal identification.

### Prior Art Documents

### Patent Literature

Patent Document 1: US Patent 2020/0168022A1

### Summary of Invention

### Technical Problem

The bezel shown in Patent Document 1 includes a plurality of cameras each attached to an outer surface of the bezel so that a user looks at the cameras in front of a bill validator, but sometimes the bezel may produce troubles in taking front face pictures of users when they look away from the optical axis of the camera. On the other hand, users may consciously touch or tamper with cameras into their damage with their hands. To avoid these troubles, the present invention aims at an object to provide a bezel that has a built-in camera invisible to the user's eye but able to take clear face images or pictures of users utilizing the bill validator.

### Solution to Problem

The bezel (8) according to the present invention, comprises a frame (4a) secured to a housing (1a) of a bill validator (1), a camera device (4) attached to the frame (4a) for taking face images of users and a cover (4c) made of translucent and light-reflective materials to obscure the camera device (4). The cover (4c) is attached to the frame (4a) to define a dark room (4d) that user-invisibly holds the camera device (4) supported on the frame (4a).

The bezel (8) according to the invention is featured to have a first function of preventing user's external visual observation on the camera device (4) as the cover (4c) of the bezel (8) may allow reflected lights from user's face to pass through the cover (4c) into the dark room (4d) so that the camera device (4) can receive reflected lights. Then, the bezel (8) would produce a second function to prevent touch of, tamper with or attack by user's hands to the camera device (4) concealed by the cover (4c). Moreover, the bezel (8) has a third function by the built-in camera device (4) of taking face images of a user seated in front of the bill validator (1) as the camera device (4) can receive reflected lights from a face of the user after passing through the cover (4c) and can save the face image information in the bill validator (1). These and other further functions and effects of the invention's bezel will be described hereinafter.

### Brief Description of Drawings

[Figure 1] A sectional view of a bill validator with the bezel of the invention formed with an opening for inserting a bill into the bezel and bill validator;
[Figure 2] An expanded sectional view of the invention's bezel;
[Figure 3] A sectional view of a bracket for supporting a camera device before the bracket is attached to a table of the bezel;
[Figure 4] A sectional view of the bracket and camera device that both are secured to the table of the bezel;

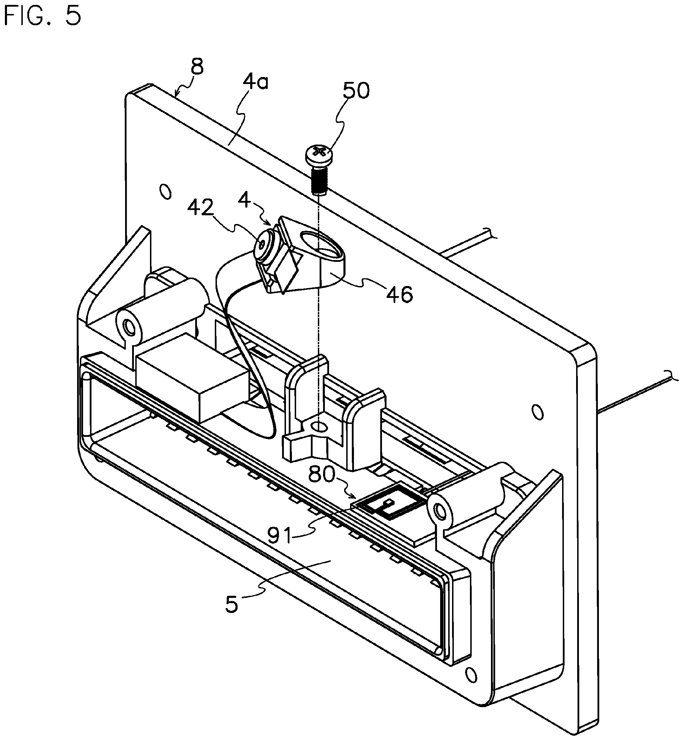

[Figure 5] A perspective view of a frame before the camera device is attached to the frame;
[Figure 6] A perspective view of the camera device that is attached to the frame;
[Figure 7] A perspective view of the bezel with a cover removed from the bezel;
[Figure 8] A perspective view of a front portion of a bill validator and electric wiring hardware connected between the bill validator and camera device in the bezel removed from the bill validator;
[Figure 9] A perspective view of the bill validator to which the bezel is attached;
[Figure 10] A block diagram in electric configuration of the bill validator connecting to the camera device in the bezel; and
[Figure 11] An operational flow chart of the electric configuration shown in Figure 10.

### Embodiments to carry out the invention

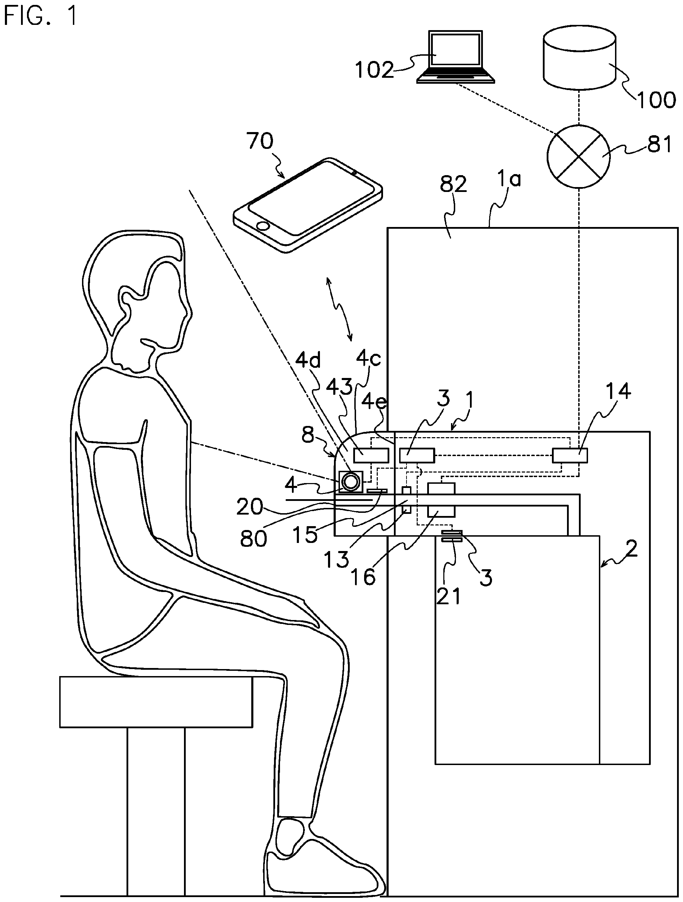

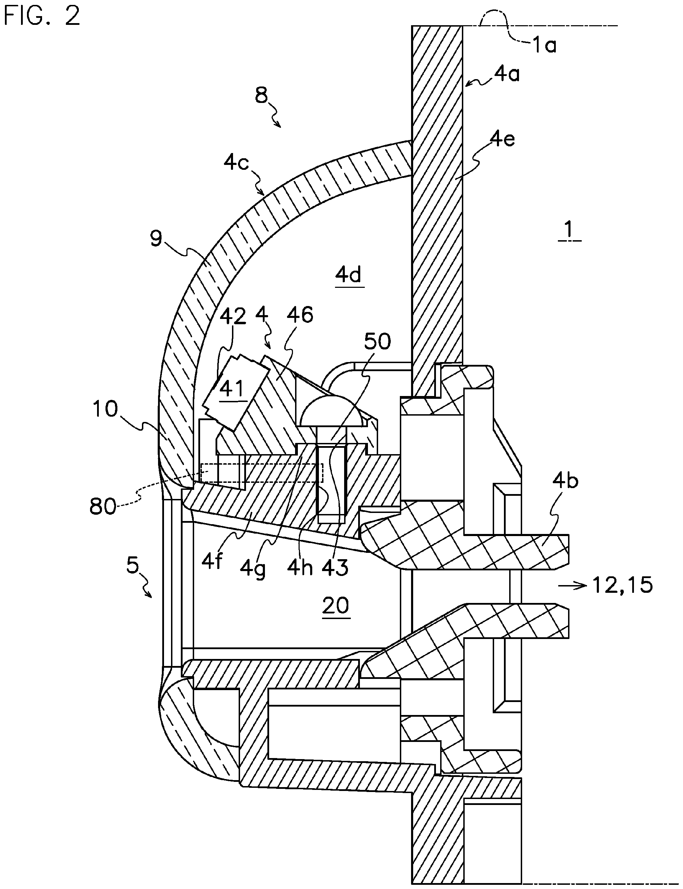

The bezel (8) according to the present invention is shown in Figures 1 and 2 to comprise a frame (4a) secured to a housing (1a) of a bill validator (1), a camera device (4) mounted on the frame (4a) for taking pictures or images in color or monochrome of a user face or person's upper body appearance and a cover (4c) removably attached to the frame (4a) for concealing the camera device (4). Frame (4a) is formed of resin materials, and cover (4c) is formed of glass or resin materials. In particular, cover (4c) is made of light-transparent glass or synthetic resins such as acrylic or polycarbonate resins coated by vapor deposition or coating or spreading with a metallic film such as light-transparent and light-reflective metallic film of nickel, silver or aluminum to form a half- or magic-mirror structure in cover (4c). Cover (4c) as a half-mirror has a visible-light-permeation ranging between preferably 30% and 70%, the best 50% that would prevent user's external visual observation on camera device (4) within frame (4a) but allow reflected lights from user face to pass through cover (4c) toward camera device (4) to steadily take user face images. Cover (4c) may be removably attached to frame (4a), utilizing a detachable structure provided between frame (4a) and cover (4c) by means of a screw or resilient hook to define a dark room (4d) for concealingly holding camera device (4). It comprises a shutter not shown and a shutter actuator drivingly connected to a validation controller (14) in bill validator (1) to timely operate the shutter. Shutter may be selected of global or rolling shutters. Global shutters may be used to take pictures of a whole image at once that is effective to instantaneously take front images of users.

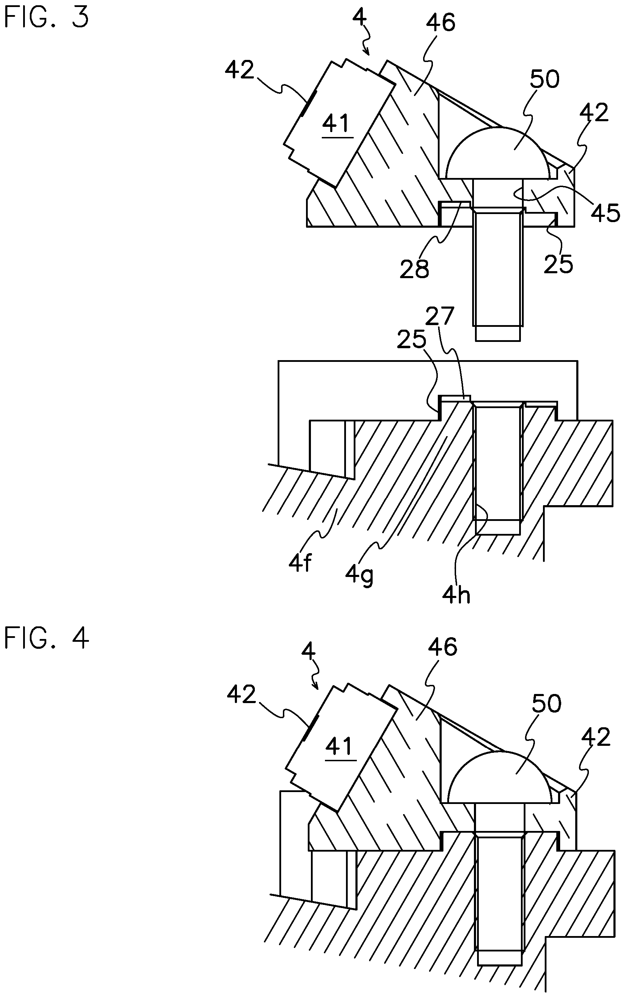

Frame (4a) comprises a back plate (4e) vertically attached in front of bill validator (1), an inlet rim (4f) horizontally secured to back plate (4e) to guide an inserted bill into an opening (20) formed within inlet rim (4f) and a table (4g) formed on top of inlet rim (4f) to support camera device (4) on table (4g). Camera device (4) is mounted on table (4g) of inlet rim (4f) secured to back plate (4e) to arrange the main optical axis of lens (42) in camera device (4) at a predetermined inclined angle between 15 and 30 degrees relative to a horizontal plane as shown in Figures 2 and 4 so that camera device (4) is set to have the view angle coverage between 45 and 80 degrees to the horizontal plane in order to definitely shoot a face of the user sitting in front of bezel (8).

Camera device (4) shown in Figures 2 to 4, comprises a camera body (41) for supporting a lens (42) through which lights reflected on a user's face can pass, a bracket (46) for supporting camera body (41) and a perforation (45) formed in bracket (46). Table (4g) of inlet rim (4f) has a threaded hole (4h), and when a screw (50) is vertically put into perforation (45) of bracket (46) and engaged with threaded hole (4h) of table (4g) to rotatably arrange camera body (41) on a horizontal plane around a vertical shaft of screw (50) so that it is possible to vary horizontal shooting directions of lens (42) of camera device (4) or to change horizontal directions of camera device (4) toward user's face in order to set, settle or keep camera device (4) in preferable shooting angles.

The embodiment shown in Figure 3 illustrates table (4g) of frame (4a) formed with circumferentially intermittent annular projections (27). Bracket (46) of camera body (41) is formed with circumferentially intermittent annular grooves (28) in parallel with annular projections (27). When bracket (46) is put and rotated on table (4g) of frame (4a), annular grooves (28) of bracket (46) may come into engagement with annular projections (27) of table (4g) and then screw (50) is tightened into threaded hole (4h) to temporally stop rotation of camera device (4) around screw (50) for fixture of camera device (4). When loosening screw (50) in threaded hole (4h) of table (4g) to slightly raise bracket (46) over table (4g), annular grooves (28) of bracket (46) are released from engagement with annular projections (27) of table (4g) so that bracket (46) and camera device (4) can be integrally rotated, then moved to a desired angular position around screw (50), and there, annular projections (27) of table (4g) are meshed with grooves (28) of bracket (46), while preventing further rotation of camera device (4) around screw (50).

Annular projections (27) and grooves (28) may be adversely formed in bracket (46) and table (4g) to rotate camera device (4) for its temporal fixing in a reverse structure of this impaction arrangement. After annular projections (27) and grooves (28) are engaged with each other, screw (50) may be tightened to firmly secure camera device (4) to table (4g) against the rotation and movement unless loosening screw (50).

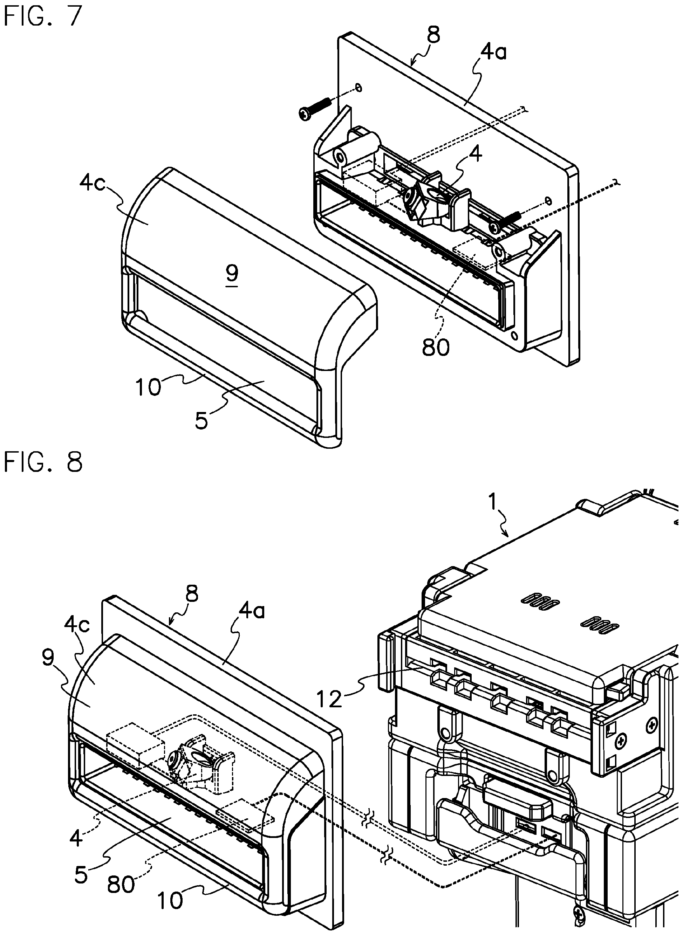

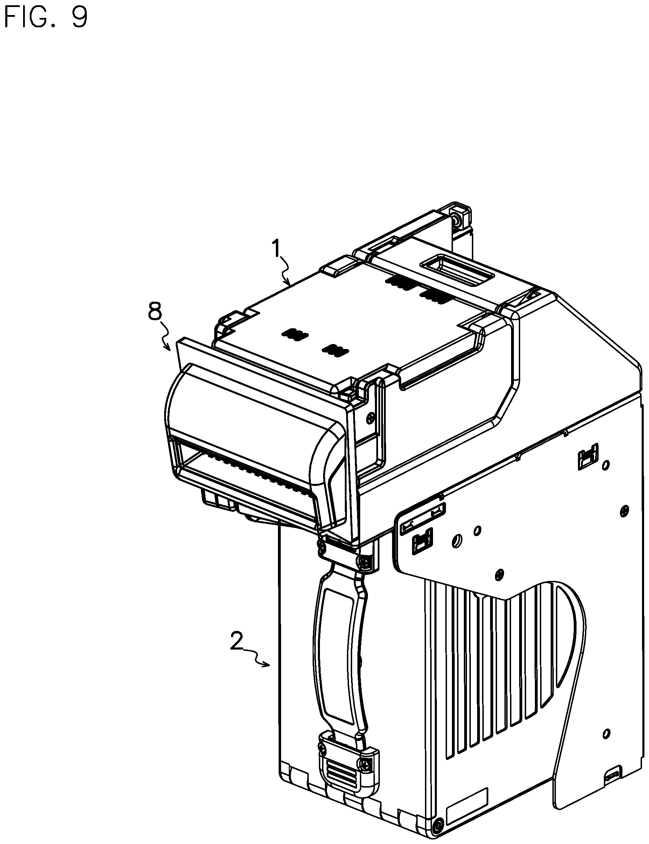

Frame (4a) shown in Figure 2, comprises a back plate (4e) vertically arranged in front of bill validator (1), an inlet rim (4f) horizontally attached to back plate (4e) to guide a bill inserted toward bill validator (1), and a table (4g) attached on a top of inlet rim (4f) to support camera device (4). Back plate (4e) may be detachably attached to a front surface of bill validator (1) with known means not shown such as resilient crook or hook. Bill validator (1) shown in Figures 7 to 9 is mounted on a bill handling apparatus not shown and it comprises a bezel (8) and a bill stacker (2). When assembling bill handling apparatus, bezel (8) is attached to bill validator (1) before or after attaching cover (4c) to frame (4a) of bezel (8) to then attach to bill validator (1) box-like bill stacker (2) with a handle. Consequently, electric lines or harness are connected among camera device (4) within bezel (8), interface (80) and an input/output device attached to a front surface of bill validator (1) to supply electric power from bill validator (1) to camera device (4) and interface (80) in order to establish electric power supply-information communication systems among camera device (4), interface (80) and bill validator (1).

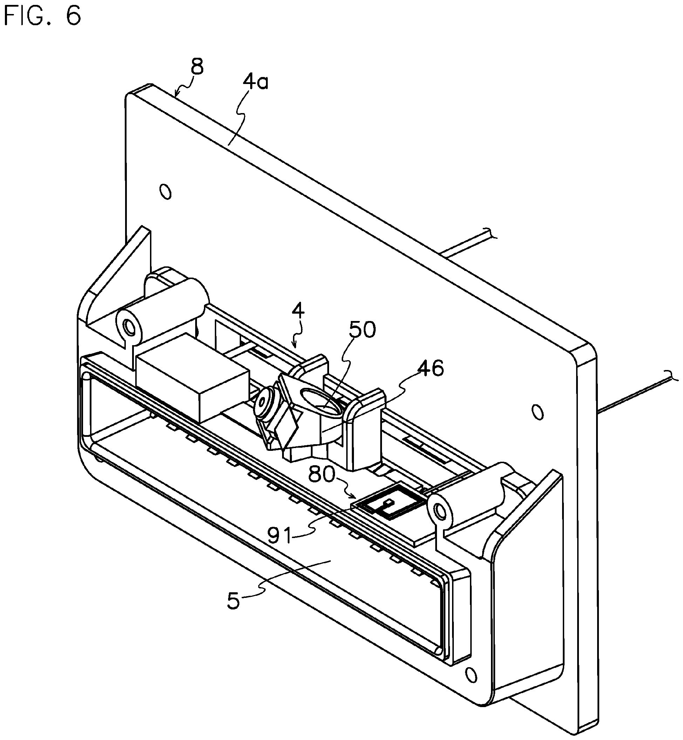

Inlet rim (4f) is secured to frame (4a) illustrated in Figures 2 and 6 to form an insertion opening (5) connected to bill inlet (12) of bill validator (1) and a table (4g) on top of inlet rim (4f). Cover (4c) comprises a curved upside (9) for defining dark room (4d) in which camera device (4) is invisibly arranged from outside, and a rectangular casing (10) integrally connected to the bottom of curved upside (9). When a bill is inserted into insertion opening (5) of inlet rim (4f), it is detected by inlet sensor (13) provided in bill inlet (12) of bill validator (1) without any other bill detectors attached to bezel (8).

Inlet sensor (13) of bill validator (1) detects inserted bill and generates a detection signal to validation controller (14) that thereby immediately triggers conveyer (17) in bill validator (1) and at the same time, continuously operates shutter actuator of camera device (4) to open and close for seriography. This is to operate shutter in camera device (4) in synchronization with detection signal from inlet sensor (13) in order to definitely shoot face images of a user sitting in front of bezel (8).

Frame (4a) depicted in Figure 2 includes a connector (4b) arranged behind inlet rim (4f) and secured to frame (4a) in front of bill validator (1). Both of insert opening (5) of inlet rim (4f) and connector (4b) serve to positively guide bills put into insert opening (5) to bill inlet (12) and inlet sensor (13) of bill validator (1).

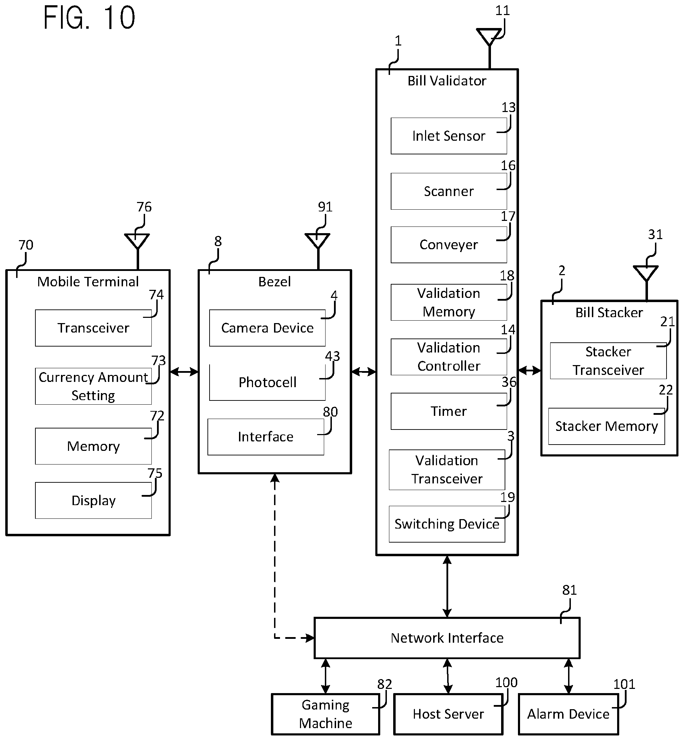

Camera device (4) shown in Figures 1 and 10 comprises a photocell (43) for photoelectrically converting image information through lens (42) into electric signals that are forwarded to validation controller (14) of bill validator (1). Both of a shutter actuator not shown in cameral device (4) and photocell (43) are electrically connected to validation controller (14) of bill validator (1).

Bill validator (1) shown in Figures 1 and 2 comprises a passageway (15) communicated with insert opening (5) of inlet rim (4f) and bill inlet (12), a conveyer (17) for moving a bill put into bill inlet (12) along passageway (15), a scanner (16) made of for example a contact image sensor for optically scanning surface images of a bill transmitted through passageway (15), and a validation memory (18) for storing bill's surface image information received from scanner (16). Validation controller (14) stores in validation memory (18) and as necessary retrieves bill's surface image information from validation memory (18).

Figure 10 illustrates a block diagram of electrical configuration for operating camera device (4) in bezel (8) and photocell (photoelectric conversion element) (43) built in camera device (4). Bezel (8) is attached to bill validator (1) which comprises an inlet sensor (13), a conveyer (17) for transporting an inserted bill along passageway (15), a scanner (16) for optically scanning main surface images of a bill passing along passageway (15) to prepare bill image information, a validation controller (14) for receiving detection signals from inlet sensor (13) to drive conveyer (17), a timer (36) for generating clock signals, and a validation transceiver (3) for transmitting bill image information from scanner (16) through an antenna (11). Validation controller (14) receives bill's main surface image information from scanner (16) and scanning time information from timer (36) to record the information in validation memory (18).

In operation of bill validator (1), a bill is inserted through insertion opening (5) of inlet rim (4f) into bill inlet (12) and detected by inlet sensor (13) that produces detection signals to validation controller (14) that then simultaneously drives conveyer (17), scanner (16) and shutter actuator of camera device (4). Accordingly, conveyer (17) transmits the bill along passageway (15) while scanner (16) optically scans surface images of the bill moving through passageway (15), and at the same time, camera device (4) takes rapid or consecutive shots of user's changing face. In this way, immediately after inlet sensor (13) produces the detection signal, validation controller (14) receives face image information of user and bill surface image information to decide mutual coincidence rates among face image pixels. Also, validation controller (14) stores in validation memory (18) each pair of user's face image information and inserted bill surface image information together with current time indication from timer (36).

Validation controller (14) sends bill image information scanned by scanner (16) from validation transceiver (3) to outer host server (100) through interface (80) connected to bill validator (1), antenna (91) and network interface (81) so that validation controller (14) compares bill image information with legitimate bill image information stored in host server (100). When validation controller (14) decides that scanned bill image information is the same as legitimate bill image information in host server (100), it drives conveyer (17) that transports and stores the bill in bill stacker (2). In this case, validation controller (14) may compare the bill image information scanned by scanner (16) with regular bill image information recorded in validation memory (18) to decide authenticity of scanned bill. Stacker transceiver (21) and stacker memory (22) in bill stacker (2) are electrically connected to validation controller (14) in bill validator (1). Validation controller (14) transmits digital bill information through validation transceiver (3), antenna (11) of bill validator (1) and antenna (31) of bill stacker (2) to stacker transceiver (21) to store digital bill information in stacker memory (22) of bill stacker (2).

Validation controller (14) compares bill image information scanned by scanner (16) with regular bill image information recorded in host server (100) or validation memory (18). When validation controller (14) decides that scanned bill image information does not agree with regular bill image information, it drives conveyer (17) in the adverse direction to return unaccepted bill to bill inlet (12) through passageway (15), and a user can recall returned bill through insertion opening (5) of bezel (8). In this case, in the same manner as validation controller (14) decides scanned bill image information as genuine, it transmits digital bill information of unaccepted bill to stacker transceiver (21) and stacker memory (22) in bill stacker (2) to store them in stacker memory (22).

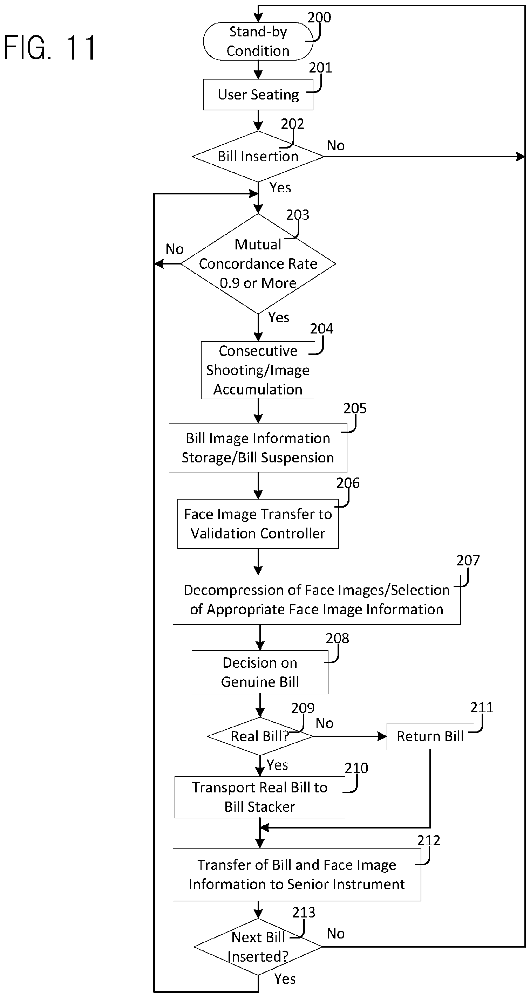

Figure 11 illustrates a flow chart of sequential operations of bezel (8) of the invention and bill validator (1) linked to bezel (8). Step 200 of Figure 11 shows standby conditions of bezel (8) and bill validator (1) while validation controller (14) is waiting for a detection signal from inlet sensor (13). When someone sits down on a seat in front of bezel (8) (Step 201) and puts a bill into insertion opening (5) of bezel (8) (Step 202), inlet sensor (13) in bill validator (1) detects inserted bill to generate a detection signal and to go on to Step 203. Step 202 shows that failure of inserting a bill into insertion opening (5) returns processing to Step 200.

Inlet sensor (13) detects a bill inserted into bill inlet (12) and produces a detection signal that are forwarded to validation controller (14) to drive camera device (4) that then rapidly shoot user's face images. Specifically, camera device (4) consecutively takes user's changing face images, selects from taken face images, those of the mutual concordance rate of 0.9 or more in a pixel unit and forwards them to validation controller (14) of bill validator (1) that accumulates them in validation memory (18). When camera device (4) takes images of changing or restless user face, it does not shoot face images as the mutual concordance rate less than 0.9 in a pixel unit, so the processing returns to Step 203. Validation controller (14) decides the user's sitting stationary condition on a chair with the mutual concordance rate 0.9 or more of face image information in a pixel unit and takes rapid shots of user's face by camera device (4), and so, it sends face image information of rapid shots from camera device (4) to validation memory (18) for storage of the information in validation memory (18) while sequence moves from Step 203 to 204. In this embodiment, both of camera device (4) and insertion opening (5) are arranged within bezel (8) in close proximity to each other, and so camera device (4) can take face images of a user who just inserts a bill into insertion opening (5) of bezel (8) to get the face images of high coincidence ratio. Description is omitted herein on known face recognition methods and algorithm therefor.

Then, operation moves to Step 205 where validation controller (14) sends bill image information scanned by scanner (16) through validation transceiver (3), antenna (11) and antenna (31) to stacker transceiver (21) to store bill image information in stacker memory (22). At the same time, validation controller (14) drives conveyer (17) to move the bill to a temporal retention or escrow position for the suspension.

Next, validation controller (14) receives user's face image information from photocell (43) (Step 206) and selects appropriate face image information (Step 207). Also, validation controller (14) compares bill image information scanned by scanner (16) with genuine bill images recorded in host server (100) or validation memory (18) for discrimination (Step 208). When validation controller (14) decides that scanned bill images do not agree with genuine bill images in Step 209, it drives conveyer (17) in the adverse direction (Step 211) to return unaccepted bill to bill inlet (12) of passageway (15) so that the user can recall the returned bill at bill inlet (12). In this embodiment of the invention, similarly to image information of bills to be considered true, unaccepted digital bill image information is also transmitted from validation controller (14) through antenna (31) and stacker transceiver (21) of bill stacker (2) to store sent digital bill image information in stacker memory (22) of bill stacker (2).

Validation controller (14) drives conveyer (17) in Step 209 to convey a bill to be considered genuine to bill stacker (2) and accumulate it therein (Step 210), and at the same time, validation controller (14) forwards digital bill information through validation transceiver (3), antenna (11) and antenna (31) to stacker transceiver (21) to retain digital bill information in stacker memory (22) in bill stacker (2). When the genuine bill is forwarded to bill stacker (2) in Step 210 or the unaccepted bill is returned to bill inlet (12) in Step 211, processing moves to Step 212 where validation controller (14) forwards bill image information and face image information to senior instruments of network interface (81) and host server (100), and then sequence goes to Step 213 where validation controller (14) confirms whether a next bill is inserted into insertion opening (5) of bezel (8). When no bill is inserted in Step 213, processing returns to Steo 200, but a next or new bill is inserted, it returns to Step 203. Collecting a plurality of bill stackers (2) from each bill validator (1), bill information is retrieved out of stacker memory (22) of bill stacker (2) to compare retrieved bill information with bill amounts recorded in a bill handling apparatus such as gaming machines, automatic teller machines, ticket vending machines, adjustment machines or vending machines.

Finally, sequence goes to Step 213 where validation controller (14) decides whether or not the same user continues to insert a next bill into bezel (8). In this case, if inlet sensor (13) produces no detection signal, operation returns to Step 200, and if another bill is inserted, processing returns to Step 203.

The embodiments of the present invention can provide the following functions and effects:
1. Light transmissive cover (4c) collaborates with frame (4a) to define dark room (4d) to arrange camera device (4) therein, preventing outside visual observation to camera device (4) due to outside light-reflection by cover (4c).
2. Cover (4c) effectively prevents dangerously user's touch or tamper with cameras to damage with their hands.
3. Camera device (4) can take face images of users seating in front of bill validator (1) by lights through cover (4c) to store them in bill validator (1).
4. Cover (4c) may be made of light-reflective resin materials of visible light permeation between 30% and 70% in a half-mirror range.
5. Face image information of users can be preserved to prepare a usage history of users.
6. When a bill is inserted into bill validator (1) by a user who has the same face image as that of a problematic person, bill validator (1) may be stopped in operation or a warning device may generate visual or acoustic alarm signals.
7. When bill validator (1) receives a fake bill, it can identify one of the criminal in view of preserved user face images.
8. Users have the same face images of good users who already paid a lot of money or are regular customers for bill validators (1), and when they insert a bill into bill validator (1) that may provide them with extra services.
9. Bezels (8) according to the present invention may be attached to existent bill validators (1).

Bill validators (1) not shown are mounted in an inner chamber covered by a closable door in a bill handling apparatus such as gaming machines, automatic teller machines, ticket vending machines, adjustment machines or vending machines, and a bezel (8) is so secured to bill validator (1) that bezel (8) is retained outside of and extended out of bill handling apparatus through an opening formed on closed door. In this attachment structure, users may easily access bezel (8) to take face image information of users by camera device (4) that may be readily and cheaply attached to existent bill validator (1) and bill handling apparatus without dismantling bill validator (1) or forming a hole in a housing of bill handling apparatus.

The embodiments of the present invention may be changed or varied in various ways. For example, an interface (80) may be arranged within bezel (8) to establish remote communication between a mobile terminal (70) and interface (80). Mobile terminal (70) may be for example a smart phone or tablet terminal formed into a touch panel with a display (75). Face image information and bill image information are stored in validation memory (18) of bill validator (1), and digital bill information is retained in stacker memory (22) of bill stacker (2). Validation controller (14) may transmit all or a part of face image information, bill image information and digital bill information stored in validation memory (18) and stacker memory (22) through interface (80) to transceiver (74) of mobile terminal (70) to indicate face and bill image information and digital bill information on a display (75) of mobile terminal (70) so that an administrator can watch face image information, bill image information and digital bill information shown by display (75) or can store the information in a memory (72) of mobile terminal (70). Validation controller (14) may briefly store and retrieve face image information from camera device (4) and bill image information from scanner (16) in validation memory (18) to transmit the information to mobile terminal (70) and indicate them on display (75). Therefore, an administrator of bill handling apparatus may send face image information and bill image information to his mobile terminal (70) to demonstrate them on display (75) and show them to those who contest about the amount of bills inserted into bill validator (1). Face image information is also stored in host server (100) that is in communication with bill validator (1) through network interface (81) and bill image information is also stored in stacker memory (22) of bill stacker (2), and then face image information and bill image information are deleted from validation memory (18).

Interface (80) of bezel (8) is connected to gaming machine (82), host server (100) and alarm device (101) through network interface (81) to compare shot face image information sent from photocell (43) of camera device (4) with recorded face image information of dangerous individuals in host server (100). When shot and recorded face images match each other, validation controller (14) ceases operation of bill validator (1) or drives alarm device (101) to circumferentially produce visual or acoustic alarm signals for high security. Validation controller (14) forwards the comparison results between shot and recorded face images to a supervision terminal (102) of Figure 1 which supervisors watch.

The above embodiment discloses camera device (4) that is triggered by bill detection signals from inlet sensor (13), instead some sensor or sensors may be provided to detect behavior or access of a user before inserting a bill into bill validator (1) in order to drive camera device (4). Otherwise, similarly to dashboard cameras for vehicles, camera device (4) may be always active to temporally store shot images by camera device (4) in a memory and when detecting bill insertion into bill validator (1), it may select stored user's face images before and after the insertion that are most appropriate for recording or recognition. Validation controller (14) can select most suitable face images for face recognition from images of characteristic face elements such as eyes, nose, ears to confirm agreements in characteristic symmetric face images at more than predetermined rate, however, description is omitted herein about such a known treatment processing in algorism.

Bezel (8) of the invention may be utilized in various ways. For example, they may include applications for face recognition such as consumer relationship management (in black lists or loyal customer list), user information management (gender, age, customer style, time zone, purchase preference). The bill handling apparatus in the embodiments of the invention may read user identification documents such as driver licenses, passports or ID cards in addition to valuable papers such as bills and coupons. In this case, bill handling apparatus may compare face images taken by camera device (4) with user identification documents to confirm identification of users. Moreover, bill handling apparatus may put software or application into practice for registration of gambling addiction (by individual declaration) utilizing face images taken by camera device (4).

Camera device (4) may read two-directional (2D) code for cashless electric payment. It may read 2D code indicated on display (75) of mobile terminal (70) such as smart phones to utilize camera device (4) for an operation terminal of purchase menu, etc. In addition, the present invention would be available in payment of admission fees, receipt of coupons, receipt of tickets when purchasing meal tickets from vending machines (for product exchange, discount or point addition) such as coupons, entry/exit management cards, membership cards, player's cards, award cards, return management of rental equipment (vending machines), substitution of transportation passes, ID management of payment terminals, ID management of cash register payment terminals, gas station payments (discounts, point addition, etc.), and the present invention may be used for self-checkout payments (discounts, point addition).

Camera device (4) may be used to capture images for detecting body temperatures, for night vision cameras, TITO (Ticket-In Ticket-Out) ticket substitute (facial authentication), player's card or award card substitute (facial authentication), combined authentication of driver's license and face (impersonation prevention), player observation in gaming markets, facial recognition payments, recording of evidence upon tampering equipment, information on people's movement or crowded conditions, motion control, preference analysis by reading facial expressions in games, behavioral analysis based on criminal psychology.

### Industrial Applicability

Other than mounted on a bill validator, the bezel according to the present invention may be applied to various technical fields using bills, for example, in gaming machines, automatic teller machines, ticket vending machines, adjustment machines or vending machines.

### Description of Symbols

(1): A bill validator; (4): A camera device; (4a): Aframe; (4b): A connector; (4c): A cover; (4d): A dark room; (4f): An inlet rim ; (4g): A table; (4h): A threaded hole; (5): An insertion opening; (8): A bezel; (9): A curved upside; (10): A rectangular casing; (11): A housing; (12): A bill inlet; (13): An inlet sensor; (14): A validation controller; (15): A passageway; (16): A scanner; (17): A conveyer; (18): A validation memory; (20): An opening; (21): Astacker transceiver; (22): A stacker memory; (27): Annular projections; (28): Annular grooves; (41): A camera body; (42): Alens; (43): A photocell; (45): A perforation; (50): A screw; (80): An interface; (81): A network interface; (82): A gaming machine; (100): A host server;

## Claims

1. A bezel comprising a frame secured to a housing of a bill validator, a camera device attached to the frame for taking images of a user's face and a cover attached to the frame for concealing the camera device, the cover being made of translucent and optically reflective materials, wherein the cover attached to the frame defines a dark room in which the camera device is arranged.

2. The bezel of claim 1, wherein the frame comprises a back plate vertically arranged in front of the bill validator, an inlet rim horizontally attached to the back plate for guiding a bill inserted into the bill validator, and a table attached on top of the inlet rim for supporting the camera device.

3. The bezel of claim 1, wherein the table of the frame is formed with a screwed hole,
the camera device comprises a camera body for supporting a lens to allow lights reflected from the user's face to pass through the lens and a bracket extending from the camera body and formed with a perforation,
a screw is attached into the screw hole of the table and the perforation of the bracket to rotatably mount the camera body around a shaft of the screw so that the camera body rotates to change the horizontal direction of the lens in the camera device.

4. The bezel of claim 1, wherein one and the other of the table in the frame and the bracket of the camera body respectively comprise an annular protrusion and an annular groove,
the camera body is rotated around the shaft of the screw relative to the table in the frame to engage the annular protrusion in one or the other of the table in the frame and the bracket of the camera body with the annular groove in the other or one of the table in the frame and the bracket of the camera body for fixation of the camera body against rotation.

5. The bezel of claim 1, wherein the screw is loosened to disengage the annular protrusion from the annular groove and rotate the camera body around the screw axis, and in that position to engage the annular protrusion and groove for their meshed contact by tightening the screw for fixation of the camera body.

6. The bezel of claim 1, wherein the inlet rim of the frame is formed with an insertion opening in communication with a bill inlet in the bill validator,
the table is formed on top of the inlet rim, and
the cover comprises a curved upside for concealing the camera device within the dark room, and a rectangular casing integrally connected to the bottom of the curved upside to insert a bill into an insertion opening of the rectangular casing in the cover and an opening of the inlet rim so that an inlet sensor provided in the bill inlet of the bill validator detects insertion of the bill.

7. The bezel of claim 1, wherein the inlet sensor detects a bill inserted into the opening of the inlet rim to produce a detection signal that is used to trigger a conveyer in the bill validator and to simultaneously drive a shutter built in the camera device for continuous shooting of the camera device.

8. The bezel of claim 6, wherein the frame comprises a connector arranged behind the inlet rim and secured to the frame in front of the bill validator,
the connector serves to guide the bill inserted into the inlet rim toward the bill inlet in the bill validator to allow the inlet sensor to steadily detect the bill through the connector.

9. The bezel of claim 7, wherein the camera device comprises a photocell for converting image information through the lens into electric signals, and an interface for receiving the electric signals from the photocell to forward the received signals to a validation controller in the bill validator,
the interface comprises a host server for storing face images of dangerous visitors, and a warning device for comparing the image information forwarded from the photocell in the camera device with the face images of the dangerous visitors to stop operation of the bill validator or generate visual or acoustic alarm signals on the periphery when the interface detects coincidence between the image information from the photocell and the face images of the dangerous visitors.

10. The bezel of claim 9, wherein the bill validator comprises a passageway communicating with the slot and bill inlet of the inlet rim in the frame, a conveyer for transporting the bill inserted into the bill inlet to the back of and along the passageway and a scanner for scanning surface images of the bill moved along the passageway, and
the validation controller stores the information of the surface images of the bill in a validation memory.

11. The bezel of claim 6, wherein the inlet sensor detects the bill inserted into the slot of the inlet rim to produce and forward detection signals to the validation controller that then receives the detection signals to drive the camera device,
the camera device continuously shoots changing face images of the users to forward to the validation controller in the bill validator the information of user's face images that have the mutual concordance rate of 0.9 or more in a pixel unit with one another, and
the validation controller stores the information of the user's face images in the validation memory.

12. The bezel of claim 11, wherein the inlet sensor detects bills inserted into the slot of the inlet rim to produce and forward detection signals to the validation controller, and
the validation controller receives the detection signals to drive the scanner that scans surface images of bills transported along the passageway.

13. The bezel of claim 12, wherein the validation controller receives the face image information bill surface image information immediately after the inlet sensor produces a detection signal, and stores a pair of the face and bill surface image information in the validation memory.

14. The bezel of claim 13, wherein the validation controller comprises a timer for generating clock signals, and
the validation controller stores in the validation memory the pair of the face and bill surface image information together with the time indication that the inlet sensor generates the detection signal.

15. The bezel of claim 7, wherein the inlet sensor generates a detection signal each time a bill is inserted into the bill validator to drive the conveyer, scanner and camera device, and stores in the validation memory the bill surface image information scanned by the scanner and user's face image information taken by the camera device.

## Amended claims

### Amended claims under Art. 19.1 PCT

1. A bezel comprising
a frame secured to a housing of a bill validator,
a camera device attached to the frame for taking images of a user's face and
a cover attached to the frame for concealing the camera device, the cover being made of translucent and optically reflective materials, wherein
the cover attached to the frame defines a dark room in which the camera device is arranged.

2. The bezel of claim 1, wherein the frame comprises
a back plate vertically arranged in front of the bill validator,
an inlet rim horizontally attached to the back plate for guiding a bill inserted into the bill validator, and
a table attached on top of the inlet rim for supporting the camera device.

3. The bezel of claim 2, wherein the table of the frame is formed with a screwed hole,
the camera device comprises a camera body for supporting a lens to allow lights reflected from the user's face to pass through the lens and a bracket extending from the camera body and formed with a perforation,
a screw is attached into the screw hole of the table and the perforation of the bracket to rotatably mount the camera body around a shaft of the screw so that the camera body rotates to change the horizontal direction of the lens in the camera device.

4. The bezel of claim 3, wherein
one and the other of the table in the frame and the bracket of the camera body respectively comprise an annular protrusion and an annular groove,
the camera body is rotated around the shaft of the screw relative to the table in the frame to engage the annular protrusion in one or the other of the table in the frame and the bracket of the camera body with the annular groove in the other or one of the table in the frame and the bracket of the camera body for fixation of the camera body against rotation.

5. The bezel of claim 4, wherein the screw is loosened to disengage the annular protrusion from the annular groove and rotate the camera body around the screw axis, and in that position to engage the annular protrusion and groove for their meshed contact by tightening the screw for fixation of the camera body.

6. The bezel of claim 2, wherein the inlet rim of the frame is formed with an insertion opening in communication with a bill inlet in the bill validator,
the table is formed on top of the inlet rim, and
the cover comprises a curved upside for concealing the camera device within the dark room, and a rectangular casing integrally connected to the bottom of the curved upside to insert a bill into an insertion opening of the rectangular casing in the cover and an opening of the inlet rim so that an inlet sensor provided in the bill inlet of the bill validator detects insertion of the bill.

7. The bezel of claim 6, wherein the inlet sensor detects a bill inserted into the opening of the inlet rim to produce a detection signal that is used to trigger a conveyer in the bill validator and to simultaneously drive a shutter built in the camera device for continuous shooting of the camera device.

8. The bezel of claim 6, wherein the frame comprises a connector arranged behind the inlet rim and secured to the frame in front of the bill validator,
the connector serves to guide the bill inserted into the inlet rim toward the bill inlet in the bill validator to allow the inlet sensor to steadily detect the bill through the connector.

9. The bezel of claim 7, wherein the camera device comprises a photocell for converting image information through the lens into electric signals,
the bill validator comprises an interface for receiving the electric signals from the photocell to forward the received signals to a validation controller in the bill validator,
the interface is connected to a host server for storing face images of dangerous visitors and to a warning device for generating visual or acoustic alarm signals on the periphery,
the host server compares the image information forwarded from the photocell in the camera device with the face images of the dangerous visitors to stop operation of the bill validator or trigger the warning device when the host server detects coincidence between the image information from the photocell and the face images of the dangerous visitors.

10. The bezel of claim 9, wherein the bill validator comprises a passageway communicating with the slot and bill inlet of the inlet rim in the frame, a conveyer for transporting the bill inserted into the bill inlet to the back of and along the passageway and a scanner for scanning surface images of the bill moved along the passageway, and
the validation controller stores the information of the surface images of the bill in a validation memory.

11. The bezel of claim 10, wherein the inlet sensor detects the bill inserted into the slot of the inlet rim to produce and forward detection signals to the validation controller that then receives the detection signals to drive the camera device,
the camera device continuously shoots changing face images of the users to forward to the validation controller in the bill validator the information of user's face images that have the mutual concordance rate of 0.9 or more in a pixel unit with one another, and
the validation controller stores the information of the user's face images in the validation memory.

12. The bezel of claim 11, wherein the inlet sensor detects bills inserted into the slot of the inlet rim to produce and forward detection signals to the validation controller, and
the validation controller receives the detection signals to drive the scanner that scans surface images of bills transported along the passageway.

13. The bezel of claim 12, wherein the validation controller receives the face image information bill surface image information immediately after the inlet sensor produces a detection signal, and stores a pair of the face and bill surface image information in the validation memory.

14. The bezel of claim 13, wherein the bill validator comprises a timer for generating clock signals, and
the validation controller stores in the validation memory the pair of the face and bill surface image information together with the time indication that the inlet sensor generates the detection signal.

15. The bezel of claim 10, wherein the inlet sensor generates a detection signal each time a bill is inserted into the bill validator,
the validation controller drives the conveyer, scanner and camera device, and stores in the validation memory the bill surface image information scanned by the scanner and user's face image information taken by the camera device.

16. A bill handling apparatus comprising a bill validator that has a housing, a bezel attached to the housing of the bill validator, a camera device attached to the bezel for taking images of users' faces, a scanner for scanning surface images of the bill inserted into the bill validator, and a validation memory for storing a pair of the images of users' faces taken by the camera device and surface images of the bill scanned by the scanner.

17. The bill handling apparatus of claim 16, wherein the bill validator comprises a timer for generating clock signals, an inlet sensor for detecting a bill inserted into a passageway in the bill validator to generate a detection signal, and a validation controller for storing in a validation memory a pair of the face and bill surface image information together with the time indication that the inlet sensor generates the detection signal.

18. The bill handling apparatus of claim 16, further comprising an interface arranged within the bezel and a mobile terminal in remote communication with the interface, wherein:
the interface forwards the face and bill surface image information stored in the validation memory to a transceiver of the mobile terminal that has a display to indicate the face and bill surface image information received from the interface.

19. The bill handling apparatus of claim 16, further comprising a host server in communicative connection to the bill validator, wherein the host server stores the image information of users' faces taken by the camera device for customer management with a blacklist or royal customer list.

20. The bill handling apparatus of claim 16, further comprising a host server in communicative connection to the bill validator for storing face images of dangerous persons, wherein:
the host server receives image information of user's face transmitted from the camera device, compares the image information of the user's face with the images of dangerous persons stored in the host server, and stop operation of the bill validator or drive a warning device when the host server detects coincidence between image information of user's face and the image of dangerous person to generate visual or acoustic alarm signals on the periphery.
